Europäisches Patentamt

European Patent Office

Office européen des brevets

(19)

(11) **EP 1 266 570 A1**

(12) **EUROPEAN PATENT APPLICATION**
published in accordance with Art. 158(3) EPC

(43) Date of publication:
**18.12.2002 Bulletin 2002/51**

(51) Int Cl.⁷: **A01N 1/02**, C12N 5/00,
G01N 33/48, G01N 1/28

(21) Application number: **01917483.8**

(22) Date of filing: **21.03.2001**

(86) International application number:
**PCT/JP01/02241**

(87) International publication number:
**WO 01/070022 (27.09.2001 Gazette 2001/39)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **21.03.2000 JP 2000083277**

(71) Applicants:
• **Mori, Yuichi**
**Yokohama-shi, Kanagawa 236-0045 (JP)**
• **Kubota, Sunao**
**Kunitachi-shi, Tokyo 186 (JP)**

(72) Inventors:
• **MORI, Yuichi**
**Yokohama-shi, Kanagawa 236-0045 (JP)**
• **KUBOTA, Sunao**
**Kunitachi-shi, Tokyo 186-0002 (JP)**
• **YOSHIOKA, Hiroshi**
**Hadano-shi, Kanagawa 257-0026 (JP)**

(74) Representative: **Bibby, William Mark et al**
**Mathisen, Macara & Co.,
The Coach House,
6-8 Swakeleys Road
Ickenham Uxbridge UB10 8BZ (GB)**

(54) **COATING MATERIALS FOR BIOLOGICAL TISSUES, COATED BIOLOGICAL TISSUES AND METHOD OF COATING BIOLOGICAL TISSUES**

(57)     A coating material for a living organism tissue which is capable of preserving a living organism tissue for a long time, and a coated product of a living organism tissue and a method of coating a living organism tissue by using such a coating material. A living organism tissue is covered by using the coating material comprising at least a hydrogel-forming polymer, and showing a thermo-reversible sol-gel transition such that it assumes a sol state at a lower temperature and assumes a gel state at a higher temperature. It is easy to obtain the ratio ($A_2/A_0$) of 20 % or more between the survival cell ratio ($A_0$) in a living organism tissue just before the coating with the coating material, and the survival cell ratio ($A_2$) in the living organism tissue two days after the coating.

Fig. 1(a)

EMBEDDING

10 ℃ AQUEOUS SOLUTION

Fig.1(b)

PRESERVATION,
CARRYING, CULTURING

37 ℃ GEL

Fig.1(c)

RECOVERY

10 ℃ AQUEOUS
SOLUTION

**Description**

Technical Field

The present invention relates to a coating material which is suitably usable for desirably coating and/or preserving a tissue or a piece of tissue, which originates from a living organism (for example, one including a predetermined number of living or surviving cells), and also relates to a coated product and a coating method using such a coating material.

For example, the coating material or coating method according to the present invention is particularly suitably usable for desirably coating and/or preserving a tissue of a living organism such as human, which is excised or extracted from the living organism by a surgical operation, etc.

The coating material or coating method according to the present invention is also suitably usable for the purpose of preserving and/or carrying a tissue of a living organism, while suppressing a decrease in the activity thereof and/or suppressing damage to the tissue, as completely as possible.

It is easy to maintain suitable cell activity in the human tissue which has been coated or preserved by using the coating material or preserving method according to the present invention and, therefore, such a human tissue is, e.g., also suitably usable for measuring the effect or side effect of a drug at a high sensitivity.

Further, the cells separated from a human tissue which has been coated or preserved by using the coating material or coating method according to the present invention are also suitably usable for a biotechnological purpose (for example, production of hybridomas or vaccines) on the basis of the activity of these cells. In addition, the material (for example, proteins, RNAs or DNAs) originating from a human tissue which has been coated or preserved by using the coating material or coating method according to the present invention is suitably usable for accumulating various kinds of fundamental data (for example, fundamental data to be required for the diagnosis of disease, gene therapy, etc).

Background Art

Heretofore, as the method of coating living organism cells, the cryopreservation or freeze-preservation method has most commonly used. In this cryopreservation method, cells are frozen with slow cooling by using cryoprotective agents such as glycerin, dimethyl sulfoxide (DMSO), sucrose, and polyvinyl pyrrolidone, and finally, these cells are preserved in liquid nitrogen.

On the other hand, in order to thaw the thus cryopreserved cells, it has been general to conduct a process wherein the cells are rapidly thawed by shaking the frozen product in a warm bath at 40°C. When the thawing rate is low in this rapid thawing, ice occurring in the cells is re-crystallized so as to destroy the cell structure, whereby the ratio of the viable cell count (or number of living or surviving cells) in the resulting cells is markedly decreased.

Among the above-mentioned cryoprotective agents, sucrose and polyvinyl pyrrolidone have relatively lower performances, and therefore glycerin or DMSO is generally used at present. However, glycerin has a problem that it takes a relatively long time until it permeates into cells. Further, DMSO has a problem that it seriously damages the cells at 37°C, and therefore it is necessary to remove DMSO by centrifugation during the thawing of the cells whereby the procedure becomes complicated. Further, DMSO has another unsolved problem that DMSO itself as the cryoprotective agent lowers the viable cell count ratio due to its toxicity.

In particular, in the case of anchorage-dependent cells constituting a living organism tissue (for example, fibroblasts), they have a serious problem that the ratio of the cells to be adhered to a ground substance or matrix is markedly decreased by the cryopreservation of the cells.

On the other hand, separately from the above-mentioned cryopreservation method, a low-temperature preservation method has also been developed. In this low-temperature preservation method, the multiplication rate of the cells is lowered by decreasing the metabolism of the cells at a comparatively low temperature of 10 - 20°C or 2 - 6°C, whereby the frequency of culture liquid exchange or passage number during the preservation of the cells is reduced.

However, in the case of the above-mentioned cryopreservation method and in the case of the low-temperature preservation method, a marked decrease in the viable cell count ratio is unavoidable and, further, long-term preservation is impossible.

On the other hand, with respect to the method of preserving a living organism tissue (or a piece of living organism tissue), it has heretofore been considered to be impossible to preserve the tissue for a long time while the viable cell count ratio constituting the tissue is maintained at a high level.

Thus, the cryopreservation of such a living organism tissue is difficult, and the reasons therefor may presumably be as follows:

The living organism tissue generally comprises cells, and an extracellular matrix (ECM) containing collagen as a main component, and therefore, 1) it is difficult for the cryoprotective agent such as DMSO and glycerin to permeates into the ECM so as to reach the cells in the inside of the living organism tissue; 2) when the frozen tissue is thawed out, it is difficult to rapidly thaw the interior portion of the frozen tissue which is an extremely large "lump" as compared with the cells, and as described above, the viable cell count ratio is markedly decreased due to the re-crystallization of ice; etc.

On the other hand, because the cryopreservation of a living organism tissue is difficult, when a living organism tissue is intended to be preserved, the most common procedure is a method (low-temperature preservation method) wherein the tissue is directly immersed in a culture liquid or preservative liquid of low temperature so as to lower the metabolism of the cells, to thereby preserve the tissue, in the same manner as in the case of the above-mentioned preservation of cells. However, as in the case of the above-mentioned preservation of "cells", a large decrease in the viable cell count ratio in the living organism tissue is unavoidable, and a long-term preservation, for two or three days, by this method is difficult.

Disclosure of Invention

An object of the present invention is to provide a coating material for a living organism tissue, a coated product of a living organism tissue, and coating method of a living organism tissue, which have solved the above-mentioned problems encountered in the prior art.

Another object of the present invention is to provide a coating material for a living organism tissue which is capable of preserving a living organism tissue for a long-term, and a coated product of a living organism tissue and a method of coating a living organism tissue by using such a coating material.

As a result of earnest study, the present inventors have found that it is extremely effective in achieving the above-mentioned objects to constitute a coating material for a living organism tissue by using a hydrogel-forming polymer which has a sol-gel transition temperature so that it assumes a sol state at a temperature lower than the sol-gel transition temperature and it assumes a gel state at a temperature higher than the sol-gel transition temperature; and shows a thermo-reversible sol-gel transition.

The coating material for living organism tissue according to the present invention is based on the above discovery, and comprises at least a hydrogel-forming polymer; the coating material showing a thermo-reversible sol-gel transition such that it assumes a sol state at a lower temperature and assumes a gel state at a higher temperature; the coating material being capable of providing a ratio ($A_2/A_0$) of 20 % or more between the survival cell ratio ($A_0$) in a living organism tissue just before the coating with the coating material, and the survival cell ratio ($A_2$) in the living organism tissue two days after the coating.

The present invention also provides a coating material for a living organism tissue, comprising at least a hydrogel-forming polymer; the coating material showing a thermo-reversible sol-gel transition such that it assumes a sol state at a lower temperature and assumes a gel state at a higher temperature; the coating material being capable of providing a ratio ($A_7/A_0$) of 5 % or more between the survival cell ratio ($A_0$) in a living organism tissue just before the coating with the coating material, and the survival cell ratio ($A_7$) in the living organism tissue seven days after the coating.

The present invention further provides a method of coating a living organism tissue, comprising:

providing a solution of a coating material in a sol state at a temperature lower than the sol-gel transition temperature of the coating material; the coating material comprising a hydrogel-forming polymer; the coating material showing a thermo-reversible sol-gel transition such that it assumes a sol state at a lower temperature and assumes a gel state at a higher temperature;

applying the coating material in the sol state to a living organism tissue; and

converting the coating material into a gel state at a temperature higher than the sol-gel transition temperature, so as to coat the living organism tissue with the coating material.

The present invention further provides a coated product comprising at least a living organism tissue, and a coating material disposed on the surrounding of the living organism tissue;

wherein the coating material is capable of providing a ratio ($A_2/A_0$) of 20 % or more between the survival cell ratio ($A_0$) in a living organism tissue just before the coating with the coating material, and the survival cell ratio ($A_2$) in the living organism tissue two days after the coating.

The present invention further provides a coated product comprising at least a living organism tissue, and a coating material disposed on the surrounding of the living organism tissue;

wherein the coating material is capable of providing a ratio ($A_7/A_0$) of 5 % or more between the survival cell ratio ($A_0$) in a living organism tissue just before the coating with the coating material, and the survival cell ratio ($A_7$) in the living organism tissue seven days after the coating.

According to the present inventors' investigation, it is presumed that the hydrogel based on the polymer constituting the coating material according to the present invention utilizes hydrophobic bonds, as at least a part of the crosslinking in the hydrogel. Accordingly, 1) the coating material assumes a sol (solution) state at a temperature lower than the transition temperature, and assumes a gel at a temperature higher than the sol-gel transition temperature, and such a sol-gel transition is thermo-reversible. 2) Further, at a temperature higher than the sol-gel transition temperature, a hydrophobic region or domain is formed in the inside of the coating material, and a physiologically active substance can be adsorbed or fixed (or immobilized) on the hydrophobic region. In addition, 3) the gel based on the coating material to be formed at a temperature higher than the sol-gel transition temperature is characterized in that it behaves as a solid toward a fast movement (i.e., a movement having a higher frequency) of a living organism tissue as the object to be coated, and also behaves as a liquid for a slow movement (i.e., a movement having a lower frequency) of the tissue, respectively. Accordingly, the coating material according to the present invention can faithfully follow a change in the form or shape of the living organism tissue which is under a state of coating or preservation, and as a result, the coating material can maintain good adhesion toward the living organism tissue.

On the contrary, in the case of agar gel (showing a positive temperature-solubility change) which has heretofore been used for culturing cells and tissues, the crosslinking therein is mainly constituted on the basis of a crystalline structure. Therefore, the bonding energy of the agar gel is high, and the temperature at which the agar gel is converted from gel to sol is as high as about 95°C, which is much higher than the physiological temperature range (usually, 0°C - 40°C). As a result, the agar gel cannot be used for a thermo-reversible coating material for a living organism tissue.

In the case of a conventional alginic acid-type gel (showing a positive temperature-solubility change), the crosslinking therein is mainly constituted on the basis of ionic bonds, and the bonding energy of the gel is high. Accordingly, it is difficult to convert the alginic acid-type gel from gel to sol under physiological conditions, and therefore the alginic acid-type gel cannot be used for a thermo-reversible coating material for a living organism tissue.

Further, in the case of a conventional collagen-type or gelatine-type gel (both showing a positive temperature-solubility change), the crosslinking therein is mainly constituted on the basis of crystalline structure or ionic bonds. Accordingly, it is necessary to use an enzyme such as collagenase and gelatinase in order to convert the gel into sol. Accordingly, it is difficult to recover a preserved tissue under physiological conditions (the use of collagenase, gelatinase, etc., imparts damage to the living organism tissue due to an enzyme reaction). In other words, collagen-type or gelatine-type gel cannot be used for a thermo-reversible coating material for a living organism tissue.

In addition, the above-mentioned conventional hydrogels are mainly formed from a hydrophilic polymer, and it is difficult to adsorb or fix a hydrophobic physiologically active substance (such as drug, and so on) unlike in the case of the coating material according to the present invention. Further, the crosslinking of the above-mentioned conventional hydrogels behaves as a solid not only toward a fast movement but also toward a slow movement, because such crosslinking is constituted by a crystalline structure, ionic bonds, etc., having a high bonding energy. Accordingly, these conventional hydrogels cannot follow a change in the form or shape of the preserved living organism tissue so that gaps or interstices occur between the living organism tissue and the hydrogel. As a result, it is difficult for these conventional hydrogels to maintain good adhesion between the living organism tissue and the hydrogel, or it is difficult for these conventional hydrogels to achieve a long-term retention of the activity of a preserved tissue based on the good adhesion.

(Presumable mechanism of coating/recovery)

According to the present inventors' investigation, the reason for the achievement of the effective coating/recovery by the coating material for living organism tissue according to the present invention may be presumed to be as follows.

In general, in living organism tissues, 1) generation, polarity and behavior of cells are controlled by an extracellular matrix (ECM) which functions as an anchorage for adhesion of cells; and 2) various activities of cells such as generation, growth and division of the cells are controlled by the communication between different kinds or similar kinds of cells.

The ECM as described in the above 1) has a structure wherein fiber-forming protein such as collagen, elastin, and fibronectin is embedded in a hydrogel comprising glycosaminoglycan chains forming a three-dimensional network structure. The tissues of a living organism are roughly classified into the connective tissue wherein cells such as fibroblasts are embedded in the hydrogel of ECM, and the basement membrane tissues comprising epithelial-type or endothelial-type cells which are glued onto the hydrogel of ECM. The hydrogel of ECM which is in contact with the cells enables the diffusion of nutrients, metabolites and hormones between blood and the cells.

On the other hand, the communication between the cells as described in the above 2) is conducted by a procedure wherein the cells secrete a chemical mediator, and transmits signals to the cells which are located with a certain distance from the chemical mediator-secreting cells.

Examples of the above-mentioned chemical mediator may include: 1) local chemical mediators which can act extremely in the vicinity of the cell; 2) neurotransmitters which are secreted by nerve cells and have a extremely short effective acting distance; 3) hormones which are secreted by endocrine cells and systemically act on target cells through bloodstream; etc.

Examples of 1) local chemical mediators as described above may include: proteins such as nerve cell growth factors, peptides such as chemotaxis factors, amino acid derivatives such as histamine, fatty acid derivatives such as prostaglandins, etc.

Examples of 2) neurotransmitters as described above may include: low-molecular weight substances including amino acids such as glycine, low-molecular peptides such as noradrenaline, acetylcholine, and enkephalin, etc.

Examples of 3) hormones as described above may include: cell growth factors such as fibroblast growth factor (FGF), epithelial growth factor (EGF), and vascular endothelial growth factor (VEGF); proteins such as insulin, somatotropin, somatomedin, adrenocorticotropic hormone (ACTH), parathyroid hormone (PTH), and thyroid-stimulating hormone (TSH); glycoproteins, amino acid derivatives such as somatostatin, vasopressin, TSH releasing factor; steroids such as cortisol, estradiol, testosteron; etc.

It is well known that the activity or various functions of the cells which have been extracted and separated from a living organism tissue by enzymatically decomposing the extracellular matrix (ECM) in the tissue by using collagenase, etc, are markedly decreased as compared with those of cells in an original tissue. It is conceivable that the cause for this decrease is attributable to damage to the cells by the collagenase, etc., to be used in the extraction and separation process. However, it is mainly considered that 1) the ECM which is important for the activity and functions of the cells is extinguished in such a procedure; and 2) the communication between the cells by various kinds of chemical mediators which are conducted by the medium of the ECM becomes impossible.

Accordingly, it is considered that, in order to preserve cells for a long term while maintaining the activity and functions thereof at a high state, it is better to preserve a living organism tissue as such (i.e., in the state of the living organism tissue per se), than to preserve the cells in the state of isolated cells which have been extracted and separated from the tissue.

On the other hand, a living organism tissue comprising plural cells which are in contact with ECM naturally has a larger size as compared with the isolated cells. In view of the supply of nutrients from the surroundings to the cells or efficient removal of wastes produced by the cells through a simple diffusion process, it is preferred to make the size of a living organism tissue as small as possible. In consideration of a phenomenon that the supply of nutrients in a blood stream to cells, and the removal of cell wastes by the blood stream are conducted by a simple diffusion process via ECM located between the blood capillary and cells (distance, 200-300 μm), it is considered that the size of the tissue may preferably be about 400-600 μm. When the living organism tissue is considered as one having a cubic shape with a side length of L, the ratio (S/V) of the area of the cubic shape (S) and the volume (V) thereof is expressed by the following formula.

$$S/V = 6 \cdot L^2 / L^3 = 6/L$$

In other words, the surface area per unit volume (S/V) is inversely proportional to the size of the tissue, and the value of S/V will be increased when the tissue is divided into pieces having a smaller size. That is, when the supply of nutrients to the tissue and the removal of wastes therefrom are intended to be made efficient, the surface area per unit volume of the tissue is increased, and the loss of the ECM or the above-mentioned chemical mediators in the tissue from the surface of the tissue will be facilitated. As described above, the ECM comprises a hydrogel comprising a three-dimensional network structure of glycosaminoglycan molecules, and a fiber-forming protein such as collagen embedded in the network structure, and the ECM is relatively insoluble in water. On the other hand, most of the chemical mediators such as proteins, glycoproteins, peptides for conducting the communication between the cells are relatively water-soluble except for some hydrophobic substances such as prostaglandins, steroidal hormones, and thyroid hormones. Accordingly, as in the case of conventional methods of preserving a living organism tissue wherein small pieces of living organism tissues are immersed in a preservative liquid or culture medium so as to conduct the preservation, most of the chemical mediators which are indispensable to the communication between the cells will be easily dissipated from the tissue into the preservative liquid or culture medium. That is, in such a case, the communication between the cells taking an important role in maintaining the activity and functions of the cells becomes impossible, and therefore the resultant viable cell count ratio or function of the cells is decreased during a very short term (two or three days). Such a phenomenon closely resembles a bleeding phenomenon from the section when a part of a body is cut, and the resultant section is commonly covered by wound dressing in order to stop the bleeding. Herein, according to the present invention, there has been developed a method of covering a living organism by wound dressing in order to prevent the dissipation of the chemical mediators such as ECM from the living organism tissue into the preservative liquid. The coating material according to the present invention is required to have the following characteristics:

1) it can not only prevent the dissipation of various kinds of chemical mediators such as ECM contained in a living organism tissue to a preservative liquid, but also the coating material does not inhibit the passage of nutrients, having relatively low-molecular weights, and the passage of wastes produced by the cells.

As described hereinabove, a hydrogel having a three-dimensional network structure is most suitable as the coating material which can prevent the dissipation of various high-molecular weight cell growth factors, comprising proteins or glycoproteins, and various kinds of hormones from a tissue, and does not obstruct the passage of low-molecular weight substances such as various kinds of amino acids, nutrients such as oxygen, and wastes.

2) As described hereinabove, it is required that the above-mentioned hydrogel having a three-dimensional network structure contains a hydrophobic portion in a sufficient quantity, in order to prevent the dissipation from the tissue of low-molecular weight hydrophobic chemical mediators such as prostaglandins, steroidal hormones, and thyroid hormones.

3) It not only has mechanical properties substantially comparable to those of a very flexible living organism tissue, but also it can change its form so as to follow a change in the form or shape of a tissue to be preserved, so that it does not cause a decrease in the adhesion thereof to the tissue or the breakage, etc., of the tissue or the coating material, etc. In order to obtain the above-mentioned characteristics, it is necessary that the bonds or bindings at crosslinking points of the three-dimensional network structure of the hydrogel are not too strong. In general, when the bonding energy of the crosslinking points of the three-dimensional network of a hydrogel is denoted by $\Delta F$, the life time of the crosslinking points ($\tau$) is shown by the following formula.

$$\tau = \tau_0 \exp (\Delta F/KT)$$

Herein, in the case of a hydrogel having a crosslinking structure showing a life time of $\tau$, the crosslinking points of the hydrogel respond to a movement in a manner such that they are in a bonded state, i.e., they are points constituting a crosslinked structure body, when the movement has a frequency higher than $1/\tau$ (sec$^{-1}$). On the other hand, the crosslinking points of the hydrogel respond to a movement in a manner such that they are in a non-bonding state, i.e., they are points constituting a liquid having no crosslinking structure, when the movement has a frequency lower than $1/\tau$ (sec$^{-1}$). This means that the hydrogel behaves as a solid toward a very fast movement, but it behaves as a liquid toward a very slow movement, respectively. As a result, the hydrogel behaves as a solid toward a very fast movement (usually, the frequency of the movement is high so that it exceeds about $10^{-2}$ sec$^{-1}$ order) which will be provided when the tissue covered with the hydrogel during the preservation thereof is moved or carried, whereby the hydrogel prevents the dissipation of the chemical mediators such as ECM from the living organism tissue into the preservative liquid.

On the other hand, the hydrogel behaves as a liquid toward a slow movement having a frequency of about $10^{-4}$ sec$^{-1}$ order or low, when the movement is one which will be provided when the tissue is gradually shrunken or inflated so as to change its form or shape during the preservation of the tissue. Accordingly, the hydrogel can faithfully follow a change in the form of a tissue so that it not only maintains a good adhesion between the tissue and the coating material, but also prevents the damage of the tissue or the coating material due to a change in the size or dimension of the tissue.

The bonding energy of the crosslinking points for forming the three-dimensional network structure having the above-mentioned property may preferably be those which are substantially the same as the thermal energy (RT) in a physiological temperature range (0°C - 40°C). The three-dimensional network structure constituted by a crosslinking structure based on covalent bonds, crystalline structure, and ionic bonds having a bonding energy as high as several tens to several hundreds kcal/mol may be unsuitable for the coating material according to the present invention. The three-dimensional network structure constituted by bonds having a bonding energy of several kcal/mol, such as hydrogen bonds, or hydrophobic bonds, or bonds due to dispersion force may suitably be used for the coating material according to the present invention.

Particularly, in view of the prevention of the dissipation of hydrophobic chemical mediators from a tissue as mentioned above, the three-dimensional network structure of the coating material may preferably be constituted by crosslinking points based on hydrophobic bonds. Further, the three-dimensional network structure, i.e., hydrogel, constituted by hydrophobic bonds, has a characteristic such that it assumes a sol state at a lower temperature, and assumes a gel state at a higher temperature, as the hydrophobic bonds have a nature that they are strengthened along with an increase in temperature. Accordingly, the temperature dependence of the transition for such a hydrogel is reverse to those of a hydrogel utilizing the other kinds of bonds, such as hydrogen bonds, and dispersion force. The property of the hydrogel utilizing hydrophobic bonds enables the embedding of a living organism tissue or cells in a sol state at a low temperature, and these properties may preferably be used for the coating material according to the present invention than conventional hydrogels, in view of the avoidance of thermal damage at the time of the embedding. Further, the thermal transition of the hydrogel utilizing hydrophobic bonds is thermally reversible. Accordingly, when the gel is to be removed from a tissue which has been embedded in the gel, the gel can be dissolved at a low temperature, whereby the preserved tissue can easily be recovered from the gel without imparting thermal damage to the tissue.

Brief Description of Drawings

Fig. 1A, Fig. 1B and Fig. 1C are schematic perspective views showing an example of the method for embedding, culturing and recovery of a living organism tissue by using the coating material according to the present invention.
Fig. 2 is a graph showing an example of the viscosity change due to temperature change of the coating material according to the present invention having various sol-gel transition temperatures.
Fig. 3 is an optical microscope photograph (image magnification: 100 times) showing original colon cancer.
Fig. 4 is an optical microscope photograph showing colon cancer (image magnification: 100 times) after the culturing thereof for 14 days.
Fig. 5 is an optical microscope photograph showing a colon cancer tissue (image magnification: 100 times) after the culturing thereof for 7 days.
Fig. 6 is an optical microscope photograph showing a colon cancer tissue (image magnification: 200 times) after the culturing thereof for 7 days.

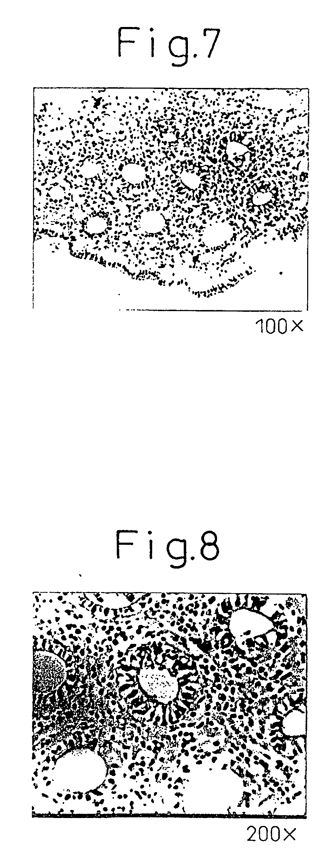

Fig. 7 is an optical microscope photograph showing a colon normal tissue (image magnification: 100 times) after the culturing thereof for 7 days.
Fig. 8 is an optical microscope photograph showing a colon normal tissue (image magnification: 200 times) after the culturing thereof for 14 days.

Best Mode for Carrying Out the Invention

Hereinbelow, the present invention will be described in detail with reference to the accompanying drawings. In the following description, "%" and "part(s)" representing a quantitative proportion or ratio are those based on mass, unless otherwise noted specifically.

(Coating)

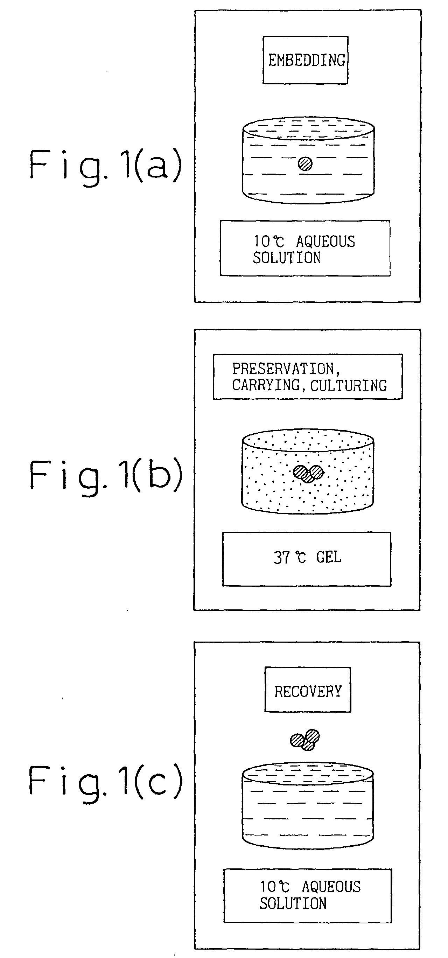

In the present invention, "coating" refers to the covering of at least a part of a living organism tissue with a coating material. In view of effective exhibition of the effect of the coating material according to the present invention, the ratio (Sc/St) between the total surface area (St) to be coated, and the surface area of the living organism tissue (Sc) coated with the coating material may preferably be 50 % or more, more preferably 70 % or more, particularly 90 % or more. The ratio (Sc/St) may most preferably be substantially 100%.
In the present invention, the state, form, etc., of a living organism tissue to be coated with the coating material are not particularly limited. More specifically, e.g., as schematically shown in Fig. 1B, appearing hereinafter, the living organism tissue floats or is embedded in a gel containing the coating material. Particularly, in such a state where the living organism tissue is floating or is embedded in a gel, the breakage, disorder or change, etc., of the tissue due to the contact and collision between the tissue and a container wall and/or between the tissue and another piece of tissue may effectively be prevented. Accordingly, such a state is particularly preferred for the preservation and/or carrying (or transportation) of the tissue.

(Coating material for living organism tissue)

The coating material for a living organism tissue according to the present invention comprises a hydrogel-forming polymer having a sol-gel transition temperature, and the coating material shows a thermo-reversible sol-gel transition such that it assumes a sol state at a lower temperature, and assumes a gel state at a higher temperature.

(Sol-gel transition temperature)

In the present invention, the terms "sol state", "gel state" and "sol-gel transition temperature" are defined in the following manner. With respect to these definitions, a paper (Polymer Journal, 18(5), 411-416 (1986)) may be referred to.
1 ml of a hydrogel in a sol state is poured into a test tube having an inside diameter of 1 cm, and is left standing for 12 hours in a water bath which is controlled at a predetermined temperature (constant temperature). Thereafter, when the test tube is turned upside down, in a case where the interface (meniscus) between the solution and air is deformed (inclusive a case wherein the solution flows out from the test tube) due to the weight of the solution per se the above polymer solution is defined as a "sol state" at the above-mentioned predetermined temperature.
On the other hand, in a case where the interface (meniscus) between the solution and air is not deformed due to the weight of the solution per se even when the test tube is turned upside down, the above polymer solution is defined as a "gel state" at the above-mentioned predetermined temperature.

In addition, in a case where a hydrogel in a sol state (solution) having a concentration of, e.g., about 3 mass % is used in the above-mentioned measurement, and the temperature at which the "sol state" is converted into the "gel state" is determined while gradually increasing the above "predetermined temperature" (e.g., in 1°C increment), the thus determined transition temperature is defined as a "sol-gel transition temperature". At this time, alternatively, it is also possible to determine the above sol-gel transition temperature at which the "gel state" is converted into the "sol state" while gradually decreasing the "predetermined temperature" (e.g., in 1°C decrement).

In the present invention, the above sol-gel transition temperature may preferably be higher than 0°C and not higher than 45°C, more preferably, higher than 0°C and not higher than 42°C ( particularly not lower than 4°C and not higher than 40°C) in view of the prevention of thermal damage to a living organism tissue.

The hydrogel material having such a preferred sol-gel transition temperature may easily be selected from specific compound as described below, according to the above-mentioned screening method (method of measuring the sol-gel transition temperature).

In a sequence of operations wherein a living organism tissue is preserved, and/or recovered by using the coating material according to the present invention, it is preferred to set the above-mentioned sol-gel transition temperature (a °C) between the temperature at the time of the preservation (b °C), and the temperature at the time of the cooling for recovery (c °C). In other words, the above-mentioned three kinds of temperatures of a °C, b °C and c °C may preferably have a relationship of b > a > c. More specifically, the value of (b - a) may preferably be 1 - 40°C, more preferably 2 - 30°C. On the other hand, the value of (a - c) may preferably be 1 - 40°C, more preferably 2 - 30°C.

(Movement-following property of coating material)

In view of the balance between the property of the hydrogel based on the coating material according to the present invention for retaining or holding a living organism tissue, and the property of the coating material for following a change in the form or shape of the tissue, it is preferred that the hydrogel based on the coating material according to the present invention shows a behavior in a solid-like manner toward a higher frequency, and that the coating material shows a behavior in a liquid-like manner toward a lower frequency. More specifically, the property of the coating material for following the movements may preferably be measured according to the following method.

(Method of measuring movement-following property)

The coating material according to the present invention comprising a hydrogel-forming polymer in a sol state (i.e., at a temperature lower than the sol-gel transition temperature) is poured into a test tube having an inside diameter of 1 cm, in an amount of the coating material corresponding to a volume of 1 mL as the resultant hydrogel. Then, the above test tube is left standing for 12 hours in a water bath which is controlled at a temperature which is sufficiently higher than the sol-gel transition temperature of the coating material (e.g., a temperature which is 10°C higher than the sol-gel transition temperature), whereby the hydrogel material is converted into a gel state.

Then, when the test tube is turned upside down, there is measured the time (T) until the interface (meniscus) between the solution and air is deformed due to the weight of the solution per se. Herein, the hydrogel will show a behavior in a liquid-like manner toward a movement having a frequency lower than $1/T$ (sec$^{-1}$), and the hydrogel will show a behavior in a solid-like manner toward a movement having a frequency higher than $1/T$ (sec$^{-1}$). In the case of the hydrogel according to the present invention, T may preferably be 1 minute to 24 hours, more preferably 5 minutes to 10 hours.

(Steady-state flow kinematic viscosity)

Alternatively, the gel property of the hydrogel based on the coating material according to the present invention may preferably be determined by measuring the steady-state flow kinematic viscosity thereof. For example, the steady-state flow kinematic viscosity η (eta) may be measured by using a creep experiment.

In the creep experiment, a predetermined shear stress is imparted to a sample, and a time-dependent change in the resultant shear strain is observed. In general, in the creep behavior of viscoelastic material, the shear rate is changed with the elapse of time in an initial stage but, thereafter, the shear rate becomes constant. The steady-state flow kinematic viscosity η is defined as the ratio of the shear stress and the shear rate at this time. This steady-state flow kinematic viscosity can also be called Newtonian viscosity. However, it is required that the steady-state flow kinematic viscosity is determined in the linear region wherein the viscosity little depends on the shear stress.

In a specific embodiment of the measuring method, a stress-controlled type viscoelasticity-measuring apparatus (model: CSL-500, mfd. by Carri-Med Co., USA) is used as the measuring apparatus, and an acrylic plate (having a diameter of 4 cm) is used as the measuring device, and the resultant creep behavior (delay curve) is measured for at least five minutes with respect to a sample having a thickness of 600 $\mu$m. The sampling time is once per one second for the initial 100 seconds, and once per ten seconds for subsequent period.

When the shear stress (stress) to be applied to the sample is determined, the shear stress should be set to a minimum value such that a displacement angle of $2\times10^{-3}$ rad or more is detected, when such a shear stress is loaded for ten seconds counted from the initiation of the measurement. When the resultant data is analyzed, at least 20 or more measured values are adopted with respect to the measurement after five minutes. The hydrogel based on the coating material according to the present invention may preferably have an $\eta$ of $5\times10^3$-$5\times10^6$Pa·sec, more preferably $8\times10^3$-$2\times10^6$ Pa·sec, particularly, not less than $1\times10^4$ Pa·sec and not more than $1\times10^6$ Pa·sec, at a temperature which is about 10°C higher than the sol-gel transition temperature.

When the above $\eta$ is less than $5\times10^3$ Pa·sec, the fluidity becomes relatively high even in a short-time observation, and the difficulty in coating/fixing of a living organism tissue with the gel is increased. On the other hand, when $\eta$ exceeds $5\times10^6$ Pa·sec, the tendency that the gel shows little fluidity even in a long-time observation is strengthened, and the movement-following property of the gel for the movement of a living organism tissue tends to be more difficult. In addition, when $\eta$ exceeds $5\times10^6$ Pa·sec, the possibility that the gel shows a fragility is strengthened, and the tendency of brittle fracture that, after a slight pure elastic deformation, the gel is easily destroyed at a stroke is strengthened.

(Storage modulus)

Alternatively, the gel property of the hydrogel based on the coating material according to the present invention may preferably be determined by measuring the dynamic elastic modulus thereof. Provided that when a strain $\gamma$ (t) = $\gamma_0$ cos $\omega$t (t is time) having an amplitude $\gamma_0$, oscillatory frequency of $\omega/2\pi$ to the gel, a stress $\sigma$ (t) = $\sigma_0$cos ($\omega$t+ $\delta$) having a constant stress of $\sigma_0$ and a phase difference of $\delta$ is obtained. When $| G | = \sigma_0/ \gamma_0$, the ratio (G"/G') between the storage modulus G '($\omega$) = |G| cos $\delta$ and the loss modulus G "($\omega$) = |G| sin $\delta$ is an indicator showing the degree of gel property.

The hydrogel based on the coating material according to the present invention behaves as a solid toward a stress of $\omega/2\pi$ = 1 Hz (corresponding to a fast movement), and behaves as a liquid toward a stress of $\omega/2\pi$ = $10^{-4}$ Hz (corresponding to a slow movement). More specifically, the hydrogel based on the coating material according to the present invention may preferably show the following property (with respect to the details of the method of measuring elastic modulus, e.g., literature: "Modern Industrial Chemistry" (Kindai Kyogyo Kagaku) No. 19, edited by Ryohei Oda, et al., Page 359, published by Asakura Shoten, 1985 may be referred to).

In the case of $\omega/2\pi$ = 1 Hz (oscillatory frequency at which the gel behaves as a solid), the ratio (G "/G ')$_s$ = (tan $\delta$)$_s$ may preferably be less than 1 (preferably 0.8 or less, particularly, 0.5 or less).

In the case of $\omega/2\pi$ =$10^{-4}$ Hz (oscillatory frequency at which the gel behaves as a liquid), the ratio (G "/G ')$_L$ = (tan $\delta$)$_L$ may preferably be 1 or more (preferably 1.5 or more, particularly, 2 or more).

The ratio {(tan $\delta$)$_s$/ (tan $\delta$)$_L$} between the above (tan $\delta$)$_s$ and (tan $\delta$)$_L$ may preferably be less than 1 (more preferably 0.8 or less, particularly, 0.5 or less).

<Measurement conditions>

Concentration of coating material: about 3 mass %
Temperature: a temperature which is about 10°C higher than the sol-gel transition temperature of the coating material
Measuring apparatus: Stress-controlled-type rheometer (model: CSL-500, mfd. by Carri-Med Co., USA)

(Polymer having hydrogel-forming property)

The hydrogel-forming polymer to be usable for the coating material according to the present invention is not particularly limited, as long as the polymer provides a thermo-reversible sol-gel transition with a hydrogel (in other words, as long as the polymer has a sol-gel transition temperature) as described above. In view of the provision of a suitable sol-gel change in physiological temperature (about 0-42°C), it is preferred for the polymer to achieve the suitable sol-gel change, e.g., by regulating the cloud point of the plural blocks having a cloud point and the hydrophilic block in the hydrogel-forming polymer, compositions, degrees of hydrophobicity, degrees of hydrophilicity, and/or molecular weights, etc., of both of the blocks, respectively.

As specific examples of a polymer having a sol-gel transition temperature in an aqueous solution thereof and reversibly assuming a sol state at a temperature lower than the sol-gel transition temperature, there have been known, e.g., polyalkylene oxide block copolymers represented by block copolymers comprising a polypropylene oxide portion and polyethylene oxide portions; etherified (or ether group-containing) celluloses such as methyl cellulose and hydroxypropyl cellulose; chitosan derivatives (K.R. Holme. et al. Macromolecules, 24, 3828 (1991)), etc.,.

In addition, there has been developed a gel utilizing Pluronic F-127 (trade name, mfd. by BASF Wyandotte Chemical Co.) comprising a polypropylene oxide portion and polyethylene oxide portions bonded to the both terminals of the polypropylene oxide portion.

It is known that a high-concentration aqueous solution of the above Pluronic F-127 is converted into a hydrogel at a temperature of not lower than about 20°C, and is converted into an aqueous solution at a temperature lower than the above-mentioned temperature. However, this material can assume a gel state only at a high concentration of not lower than about 20 mass %. In addition, even when such a gel having a high concentration of not lower than about 20 mass % is maintained at a temperature of not lower than the gel-forming temperature, the gel is dissolved by a further addition of water thereto. In addition, as the molecular weight of the Pluronic F-127 is relatively low, and it shows an extremely high osmotic pressure at a high concentration of not less than about 20 mass %, and simultaneously the Pluronic F-127 may easily permeate the cell membranes, whereby the Pluronic F-127 can adversely affect the living organism tissue.

On the other hand, in the case of an etherified cellulose represented by methyl cellulose, hydroxypropyl cellulose, etc., the sol-gel transition temperature thereof is generally as high as about 45°C or higher (N. Sarkar, J. Appl. Polym. Science, 24, 1073, (1979)). On the other hand, the preservation of a living organism tissue is usually conducted at a temperature in the vicinity of 37°C or lower. At this temperature, the above etherified cellsulose assumes a sol state so that it is substantially difficult to cover the living organism tissue by using the etherified cellsulose.

As described above, the conventional polymers having a sol-gel transition temperature in an aqueous solution thereof, and reversibly assuming a sol state at a temperature lower than the above transition temperature have the following problems:

(1) If the polymer is once converted into a gel state at a temperature higher than the sol-gel transition temperature, the resultant gel is dissolved when water is further added thereto; (2) The polymer has a sol-gel transition temperature higher than the temperature for the preservation of a living organism tissue (in the neighborhood of 37°C or lower), and therefore the polymer assumes a sol state at the preservation temperature; (3) It is necessary to increase the concentration of the polymer in an aqueous solution thereof to an extremely high value, in order to convert the polymer solution into a gel state; etc.

On the contrary, according to the present inventor's investigation, it has been found that the above-mentioned problems have been solved by constituting a coating material for a living organism tissue by using a hydrogel-forming polymer preferably having a sol-gel transition temperature of higher than 0°C and not higher than 42°C (e.g., a polymer which comprises plural blocks having a cloud point and hydrophilic blocks combined therewith, and the aqueous solution of which has a sol-gel transition temperature, and which reversibly shows a sol state at a temperature lower than the sol-gel transition temperature).

(Preferred hydrogel-forming polymers)

The hydrogel-forming polymer preferably usable as the coating material according to the present invention may preferably comprise a combination of plural hydrophobic blocks having a cloud point, and hydrophilic blocks bonded thereto. The presence of the hydrophilic blocks is preferred in view of the provision of the water-solubility of the hydrogel material at a temperature lower than the sol-gel transition temperature. The presence of the plural hydrophobic blocks having a cloud point is preferred in view of the conversion of the hydrogel material into a gel state at a temperature higher than the sol-gel transition temperature. In other words, the blocks having a cloud point become water-soluble at a temperature lower than the cloud point, and are converted into a water-insoluble state at a temperature higher than the cloud point, and therefore these blocks function as crosslinking points constituted by hydrophobic bonds for forming a gel at a temperature higher than the cloud point. That is, the cloud point based on the hydrophobic bonds corresponds to the above-mentioned sol-gel transition temperature of the hydrogel.

However, it is not always necessary that the cloud point corresponds to the sol-gel transition temperature. This is because the cloud point of the above-mentioned "blocks having a cloud point" is generally influenced by the bonding between the hydrophilic block and the blocks having a cloud point.

The hydrogel to be used in the present invention utilizes a property of hydrophobic bonds such that they are not only strengthened along with an increase in temperature, but also the change in the hydrophobic bond strength is reversible with respect to the temperature. In view of the formation of plural crosslinking points in one molecule, and the formation of a gel having a good stability, the hydrogel-forming polymer may preferably have a plurality of "blocks having a cloud point".

On the other hand, as described above, the hydrophilic block in the hydrogel-forming polymer has a function of causing the hydrogel-forming polymer to be changed into a water-soluble state at a temperature lower than sol-gel transition temperature. The hydrophilic block also has a function of providing the state of an aqueous (or water-containing) gel, while preventing the aggregation and precipitation of the hydrogel material due to an excess increase in the hydrophobic binding force at a temperature higher than the transition temperature.

(Plural blocks having a cloud point)

The plural blocks having a cloud point may preferably comprise a polymer block which shows a negative solubility-temperature coefficient with respect to water. More specifically, such a polymer may preferably be one selected from the group consisting of: polypropylene oxide, copolymers comprising propylene oxide and another alkylene oxide, poly N-substituted acrylamide derivatives, poly N-substituted methacrylamide derivatives, copolymers comprising an N-substituted acrylamide derivative and an N-substituted methacrylamide derivative, polyvinyl methyl ether, and partially-acetylated product of polyvinyl alcohol. It is preferred that the above polymer (blocks having a cloud point) has a cloud point of higher than 4°C and not higher than 40 C, in view of the provision of a polymer (compound comprising a plurality of blocks having a cloud point, and hydrophilic blocks bonded thereto) to be used in the present invention having a sol-gel transition temperature of higher than 4°C and not higher than 40°C.

It is possible to measure the cloud point by, e.g., the following method. That is, an about 1 wt.%-aqueous solution of the above polymer (block having a cloud point) is cooled to be converted into a transparent homogeneous solution, and thereafter the temperature of the solution is gradually increased (temperature increasing rate: about 1°C /min.), and the point at which the solution first shows a cloudy appearance is defined as the cloud point.

Specific examples of the poly N-substituted acrylamide derivatives and poly N-substituted methacrylamide derivatives are described below.

Poly-N-acryloyl piperidine
Poly-N-n-propyl methacrylamide
Poly-N-isopropyl acrylamide
Poly-N,N-diethyl acrylamide
Poly-N-isopropyl methacrylamide
Poly-N-cyclopropyl acrylamide
Poly-N-acryloyl pyrrolidine
Poly-N,N-ethyl methyl acrylamide
Poly-N-cyclopropyl methacrylamide
Poly-N-ethyl acrylamide

The above polymer may be either a homopolymer or a copolymer comprising a monomer constituting the above polymer and "another monomer". The "another monomer" to be used for such a purpose may be either a hydrophilic monomer, or a hydrophobic monomer. In general, when copolymerization with a hydrophilic monomer is conducted, the resultant cloud point may be increased. On the other hand, when copolymerization with a hydrophobic monomer is conducted, the resultant cloud point may be decreased. Accordingly, a polymer having a desired cloud point (e.g., a cloud point of higher than 4°C and not higher than 40°C ) may also be obtained by selecting such a monomer to be used for the copolymerization.

(Hydrophilic monomer)

Specific examples of the above hydrophilic monomer may include: N-vinyl pyrrolidone, vinyl pyridine, acrylamide, methacrylamide, N-methyl acrylamide, hydroxyethyl methacrylate, hydroxyethyl acrylate, hydroxymethyl methacrylate, hydroxymethyl acrylate, methacrylic acid and acrylic acid having an acidic group, and salts of these acids, vinyl sulfonic acid, styrenesulfonic acid, etc., and derivatives having a basic group such as N,N-dimethylaminoethyl methacrylate, N,N-diethylaminoethyl methacrylate, N,N-dimethylaminopropyl acrylamide, salts of these derivatives, etc. However, the hydrophilic monomer to be usable in the present invention is not restricted to these specific examples.

(Hydrophobic monomer)

On the other hand, specific examples of the above hydrophobic monomer may include: acrylate derivatives and methacrylate derivatives such as ethyl acrylate, methyl methacrylate, and glycidyl methacrylate; N-substituted alkyl methacrylamide derivatives such as N-n-butyl methacrylamide; vinyl chloride, acrylonitrile, styrene, vinyl acetate, etc. However, the hydrophobic monomer usable in the present invention is not restricted to these specific examples.

(Hydrophilic block)

On the other hand, specific examples of the hydrophilic block to be combined with (or bonded to) the above-mentioned block having a cloud point may include: methyl cellulose, dextran, polyethylene oxide, polyvinyl alcohol, poly N-vinyl pyrrolidone, polyvinyl pyridine, polyacrylamide, polymethacrylamide, poly N-methyl acrylamide, polyhydroxymethyl acrylate, polyacrylic acid, polymethacrylic acid, polyvinyl sulfonic acid, polystyrene sulfonic acid, and salts of these acids; poly N,N-dimethylaminoethyl methacrylate, poly N,N-diethylaminoethyl methacrylate, poly N,N-dimethylaminopropyl acrylamide, and salts of these, etc.

The process for combining the above blocks having a cloud point with the hydrophilic blocks is not particularly limited. For example, it is possible to conduct such a combination by introducing a polymerizable functional group (such as acryloyl group) into either one of the above blocks, and copolymerizing with the resultant product a monomer capable of providing the other blocks.

Alternatively, it is also possible to obtain a combination product of the above blocks having a cloud point with the hydrophilic blocks by copolymerizing a monomer capable of providing the blocks having a cloud point with a monomer capable of providing the hydrophilic blocks.

In addition, the blocks having a cloud point and the hydrophilic blocks may also be combined or bonded with each other by preliminarily introducing reactive functional groups (such as hydroxyl group, amino group, carboxyl group, and isocyanate group) into both kinds of the blocks, and combining these blocks by using a chemical reaction. At this time, it is usual to introduce a plurality of reactive functional groups into the hydrophilic blocks.

Further, the polypropylene oxide having a cloud point and the hydrophilic blocks may be combined or bonded with each other by repetitively subjecting polypropylene oxide and a monomer constituting the above "other water-soluble block" (such as ethylene oxide) to a stepwise or consecutive polymerization, to thereby obtain a block copolymer comprising polypropylene oxide and a water-soluble block (such as polyethylene oxide) combined therewith.

Such a block copolymer may also be obtained by introducing a polymerizable group (such as an acryloyl group) into the terminal of polypropylene oxide, and then copolymerizing therewith a monomer constituting the hydrophilic block.

Further, a polymer usable in the present invention may be obtained by introducing a functional group which is reactive in a bond-forming reaction with the terminal functional group of polypropylene oxide (such as hydroxyl group) into a hydrophilic block, and reacting the resultant hydrophilic blocks and the polypropylene oxide. In addition, a hydrogel-forming polymer usable in the present invention may be obtained by connecting materials such as one comprising polypropylene glycol and polyethylene glycol bonded to both terminals thereof (such as Pluronic F-127; trade name, mfd. by Asahi Denka Kogyo K.K.).

In an embodiment of the present invention wherein the hydrogel-forming polymer comprises a block having a cloud point, at a temperature lower than the cloud point, the polymer may completely be dissolved in water so as to assume a sol state, since the above-mentioned "blocks having a cloud point" present in the polymer molecule are water-soluble together with the hydrophilic blocks. However, when a solution of the above polymer is heated up to a temperature higher than the cloud point, the "blocks having a cloud point" present in the polymer molecule become hydrophobic so that separate molecules of the polymer are associated or aggregated with each other due to a hydrophobic interaction.

On the other hand, the hydrophilic blocks are water-soluble even at this time (i.e., even when heated up to a temperature higher than the cloud point), and therefore, the polymer according to the present invention, in water, is formed into a hydrogel having a three-dimensional network structure wherein hydrophobic association portions between the blocks having a cloud point constitute the crosslinking points. The resultant hydrogel is again cooled to a temperature lower than the cloud point of the "blocks having a cloud point" present in the polymer molecule, the blocks having a cloud point become water-soluble and the above crosslinking points due to the hydrophobic association are released or liberated so that the hydrogel structure disappears, whereby the polymer according to the present invention is again formed into a complete aqueous solution. In the above-described manner, the sol-gel transition in the polymer according to the present invention is based on the reversible hydrophilic-hydrophobic conversion in the blocks having a cloud point present in the polymer molecule at the cloud point, and therefore the transition has a complete reversibility in accordance with a temperature change.

(Solubility of gel)

As described above, the hydrogel-forming polymer according to the present invention comprising at least a polymer having a sol-gel transition temperature in an aqueous solution thereof, substantially shows a water insolubility at a temperature (d °C) higher than the sol-gel transition temperature, and reversibly shows water solubility at a temperature (e °C) lower than the sol-gel transition temperature.

The above-mentioned temperature (d °C) may preferably be a temperature which is at least 1°C, more preferably at least 2°C (particularly preferably, at least 5°C) higher than the sol-gel transition temperature. Further, the above-mentioned "substantial water insolubility" may preferably be a state wherein the amount of the above polymer to be dissolved in 100 ml of water at the above temperature (d °C) is 5.0 g or less (more preferably 0.5 g or less, particularly preferably 0.1 g or less).

On the other hand, the above-mentioned temperature (e °C) may preferably be a temperature which is at least 1°C, more preferably at least 2°C (particularly preferably, at least 5°C) lower than the sol-gel transition temperature, in terms of the absolute values of these temperatures. Further, the above-mentioned "water solubility" may preferably be a state wherein the amount of the above polymer to be dissolved in 100 ml of water at the above temperature (e °C) is 0.5 g or more (more preferably 1.0 g or more). The above "to show a reversible water solubility" refers to a state wherein an aqueous solution of the above hydrogel-forming polymer shows the above-mentioned water solubility at a temperature lower than the sol-gel transition temperature, even after the polymer is once formed into a gel state (at a temperature higher than the sol-gel transition temperature).

A 10%-aqueous solution of the above polymer may preferably show a viscosity of 10 - 3,000 centipoises, (more preferably, 50 - 1,000 centipoises) at 5°C. Such a viscosity may preferably be measured, e.g., under the following measurement conditions:

Viscometer: Stress-controlled type rheometer (model: CSL-500, mfd. by Carri-Med Co., USA)
Rotor diameter: 60 mm
Rotor configuration: Parallel-plate type
Measurement frequency: 1 Hz (hertz)

Even when an aqueous solution of the hydrogel-forming polymer according to the present invention is formed into a gel state at a temperature higher than the sol-gel transition temperature, and thereafter the resultant gel is immersed in a large amount of water, the gel is not substantially dissolved in water. For example, such a characteristic of the above coating material may be confirmed in the following manner.

More specifically, 0.15 g of the hydrogel-forming polymer according to the present invention is dissolved in 1.35 g of distilled water at a temperature lower than the above sol-gel transition temperature (e.g., under cooling with ice) to thereby prepare a 10 mass %-aqueous solution. Then, the resultant solution is poured into a plastic Petri dish having a diameter of 35 mm, then the dish is warmed up to a temperature of 37°C to form a gel having a thickness of about 1.5 mm in the dish, and the total weight of the Petri dish (f gram) containing the gel is measured. Then, the entirety of the Petri dish containing the gel is left standing in 250 ml of water at 37°C for 10 hours, and thereafter the total weight of the Petri dish (g gram) containing the gel is measured, to thereby determine whether the gel has been dissolved from the gel surface or not. At this time, in the hydrogel-forming polymer according to the present invention, the ratio of weight decrease in the gel, i.e., the value of {(f-g)/f} may preferably be 5.0 % or less, more preferably 1.0 % or less (particularly preferably 0.1 % or less).

Even when an aqueous solution of the hydrogel-forming polymer according to the present invention was converted into a gel state at a temperature higher than the sol-gel transition temperature, and then the resultant gel was immersed in a large amount (about 0.1 - 100 times larger than the gel, by volume ratio), the gel was not dissolved for a long period of time. Such a property of the polymer to be used in the present invention may be achieved, e.g., by the presence of at least two (a plurality of) blocks having a cloud point in the polymer molecule.

On the contrary, according to the present inventors' experiments, in a case where a similar gel was formed by using the above-mentioned Pluronic F-127 comprising polypropylene oxide and polyethylene oxide bonded to both terminals thereof, the resultant gel was completely dissolved when the gel is left standing in water for several hours.

In order to suppress the cytotoxicity of a non-gel state to a low level as completely as possible, it is preferred to use a hydrogel-forming polymer which can be converted into a gel state at a concentration of 20% or less (more preferably 15% or less, particularly 10% or less) in terms of the concentration of the polymer based on water, i.e., {(polymer)/(polymer + water)} $\times 100$ (%).

(Other components)

The coating material according to the present invention comprises at least the above-mentioned polymer having a sol-gel transition temperature. However, the coating material may also comprise another component, as desired. Specific examples of "other components" in such an embodiment may include: antibiotics, ECM such as collagen, the above-mentioned local chemical mediators, insulin cells, hormones such as growth factors, etc.

(Living organism tissue)

In the present invention, the term "living organism tissue" refers to a tissue of a living organism such as animals (particularly, human), plants, microbes, and viruses. The term "living organism tissue" is used so that it also includes tissue itself, a piece of the tissue, and further cells or aggregates of cells which have been separated from the tissue. It is sufficient that the "living organism tissue" has a number of living organism cells to a certain degree which can be preserved or maintained, and the "living organism tissue" may be in a multicellular state or a single-cell state. In addition, the donor from which the tissue originates is not particularly limited. For example, the donor may be a living body, or the dead body of a living organism which has been preserved under a predetermined state (for example, at a cryogenic temperature). As described above, it is possible that when a cellular tissue extracted from the body of a living organism which has been preserved at a cryogenic temperature is intended to be rapidly thawed, a part of or most of the cells constituting the tissue (for example, in the core portion of a piece of the tissue) are destroyed, and the viable cell count is markedly decreased. Even in this case, the resultant cellular tissue is usable in the present invention as long as the cellular tissue has a viable cell count at a certain degree which can be preserved or maintained by using the coating material according to the present invention.

In the following measurement of the viable cell count ratio (i.e., ratio of viable cells) or survival cell ratio, e.g., it is preferred to use a tissue originating from a human origin such as the gullet, stomach, small intestine, colon, pancreas, liver, skin, blood vessel, and bone (particularly, tissue of human colon cancer described hereinafter).

(Exemplification of living organism tissues)

The coating material according to the present invention is preferably applicable to a living organism tissue (or cells) which has heretofore been preserved and/or carried (or transported) by using various kinds of "preservative liquid". Specific example of such a living organism tissue (or cells) may include: the following items in addition to those as described above (such as gullet, stomach, small intestine, colon, pancreas, liver, skin, blood vessel, and bone).

(1) Tissue or organ to be transplanted: cornea, skin, bone
(2) Blood components: red blood cells, white blood corpuscle, blood platelet,
(3) Immunity system-related cells: T cells (for example, T cells which have been taken out from a subject, and the T cells are returned to the subject, as desired), dendritic cells
(4) Others: embryo cells, ES (embryonic stem) cells (so-called universal cells), fertilized ovum (for example, for entosomatic fertilization or ectosomatic (or in-vitro) fertilization)

(Viable cell count just before coating)

The size, form, structure, etc., of the "living organism tissue" usable for the present invention is not limited as long as the preservation or maintenance of the tissue is possible. In view of easiness in the handling of the living organism tissue, the value of OD(450)/mg protein thereof(corresponding to viable cell count in the living organism tissue; T =0) in a state just before the coating of the tissue with the coating material may preferably be about 1.0 or more, more preferably about 2.0 or more, provided that the value of OD(450)/mg protein is measured by a method using an enzyme activity as described below.

(Viable cell count 7 days after coating)

In the present invention, in view of easiness in the preservation and maintenance of the tissue with the coating material, the value of $A_T$ = OD(450)/mg protein (T=7; corresponding to the above-mentioned viable cell count) in a state after 7 days counted from the coating thereof with the coating material may preferably be about 1.0 or more, more preferably about 1.5 or more.

(Survival cell ratio of living organism tissue)

In the present invention, the ratio ($A_2/A_0$) of the survival cell ratio ($A_0$) in the piece of a living organism tissue just before the coating, and the survival cell ratio ($A_2$)in the piece of the living organism tissue at the time of 2 days after the coating may preferably be 20% or more, more preferably 30% or more (particularly 50% or more).

In addition, in the present invention, the ratio ($A_7/A_0$) of the survival cell ratio ($A_0$) in the piece of a living organism tissue just before the coating, and the survival cell ratio ($A_7$) in the piece of a living organism tissue at the time of 7 days after the coating may preferably be 5 % or more, more preferably 10% or more (particularly 20% or more).

The above-mentioned respective values of the survival cell ratio ($A_T$) may be measured, e.g., by the following method utilizing an enzyme activity.

<Method of measuring survival cell ratio>

In each of the wells of a 24-well plate (made of plastic, size of one well is about 15 mm in length, about 15 mm in width, and about 20 mm in depth; among commercially available product, e.g., trade name: Multiwell, mfd. by Becton-Dickinson Co.), a living organism tissue (volume: about $0.5 \times 0.5 \times 0.5$ mm) to be measured is embedded in the coating material according to the present invention (about 200 µl as a sol state). Then, the temperature of the preserved living organism tissue is lowered to a temperature lower than the sol-gel transition temperature of the coating material (e.g., at a temperature which is 10°C lower than the sol-gel transition temperature), so as to dissolve the coating material, and thereafter 50 µl of WST-8 reagent (mfd. by Doujin Kagaku Co., Ltd.) for measuring succinic acid dehydrogenase activity is added thereto. The 24-well plate is subjected to a reaction at a temperature lower than the sol-gel transition temperature (e.g., at a temperature which is 10°C lower than the sol-gel transition temperature; e.g., at 10°C) for ten hours, and then is kept at a temperature of about 4°C for one hour so as to convert the product into a state of a homogeneous aqueous solution.

The resultant aqueous solution is pipetted into a 96-well plate so as to provide a volume of 200 µl in each well, and the absorbance (OD (450)) is measured at 450 nm (reference wavelength 620 nm) by using a colorimeter for micro- plate. It has been confirmed that the thus obtained OD (450) is proportional to the number of living organism cells (viable cell count) in a living organism tissue (for example, literature of Furukawa, T. et al, "High in vitro-in vitro correlation of drug response using sponge gel-supported three-dimensional histoculture and MTT end point", Int. J. Cancer 51:489, 1992 may be referred to).

On the other hand, as the indication of the number of total cells of a living organism tissue, the total protein quantity in the tissue is usable. For example, the total protein quantity in a tissue may be measured by using BCA (Bicinchoninic acid) Protein Assay Kit (mfd. by Doujin Kagaku Co., Ltd.).

In the measurement of the total protein quantity in a tissue, a living organism tissue (volume: about $0.5 \times 0.5 \times 0.5$ mm) is reacted with the WST-8 reagent, and then the resultant product is centrifuged at 4°C by means of a multi-frame centrifugal separator (trade name: Multiobject Refrigerated Centrifuge LX-120; mfd. by Tommy Seiko Co., number of revolutions 4,000 rpm) so as to separate the tissue and the reaction liquid. After the reaction liquid is removed, 200 µl of a BCA reagent is added into the wells each containing the tissue, and is subjected to reaction at 37°C for 30 minutes, the absorbance (OD (570)) is measured by using a colorimeter for micro-plate (e.g., trade name: Labosystems Multiscan MS, mfd. by Dainippon Pharmaceutical Co.) at a wavelength of 570 nm.

It has been confirmed that the weight of a tissue is proportional to the OD (570) (for example, Hiromitsu Matsuoka, "Anticancer Agents Sensitivity Test by Three-Dimensional Culture Using Thermo-Reversible Hydrogel (TGP) as Culture Medium", Journal of St. Marianna University, School of Medicine, 27:133 - 140, 1999 may be referred to).

Based on the OD (450) and OD (570) which have been measured in the above-mentioned manner, the survival cell ratio $A_T$ of the tissue after the preservation for a predetermined period (T days) is shown by the following formula.

$$A_T = OD\ (450)/OD(570)$$

(for example, T =0, 2, 7 or more).

(Elution-suppressing function)

The coating material according to the present invention (hydrogel based on the above-mentioned polymer) has a three-dimensional network structure which suppresses the elution of a substance (for example, physiologically active substance) contained in a living organism tissue as the object to be coated, toward the outside of the tissue. In addition, in an embodiment wherein the coating material includes a hydrophobic portion, this hydrophobic portion has an action of suppressing the elution of a fat-soluble substance (e.g., fat-soluble physiologically active substance) contained in a living organism tissue toward the outside of the tissue.

(Method of preserving or maintaining living organism tissue)

In order to preserve a living organism tissue, preferably a tissue which has been extracted by a surgical operation, etc., from a living body tissue of an animal (particularly, human) or a piece of organ in a good state wherein the activity of the tissue or organ is maintained, it is preferred to conduct efficiently the supply of nutrition from the surroundings of the tissue to the interior of the tissue, the removal of wastes accumulated in the tissue or piece of organ, toward the surroundings of the tissue or piece.

The size of a living organism tissue which can be coated by using the coating method according to the present invention is not particularly limited, as long as the preservation or maintenance of the living organism tissue is possible. However, in view of the efficiency in the above-mentioned supply of nutrients or removal of wastes, it is preferred to cut the tissue or organ into small pieces so as to provide the size (e.g., in terms of the length of one side of a cube which has the same volume as that of the piece) of the tissue or organ pieces of 2 mm or less, more preferably 1 mm or less, particularly 0.5 mm or less, prior to the coating thereof with the coating material according to the present invention.

Separately, a hydrogel-forming polymer (coating material according to the present invention) is dissolved in a tissue culture medium (e.g., trade name: RPMI-1640, mfd. by Life Technologies Co.) at a temperature lower than the sol-gel transition temperature of the polymer, in a concentration range of preferably 1-20 mass %, more preferably 3-15 mass % (particularly, 5-10 mass %).

In the present invention, the method of embedding or coating the living organism tissue obtained above (for example, pieces thereof) with the coating material according to the present invention so as to preserve the tissue is very simple and easy. For example, it is possible to adopt a method wherein the coating material is converted into a sol (dissolution) state at a temperature lower than the sol-gel transition temperature thereof, and tissue pieces are soaked in the resultant solution of the coating material; a method wherein such tissue pieces are coated by sprinkling such a solution of the hydrogel material on the tissue pieces. The coating material which has been disposed on the surroundings of the tissue pieces which have been soaked in, coated with or embedded in the coating material in this manner, is converted into a gel state at a temperature higher than the sol-gel transition temperature of the hydrogel-forming polymer, whereby the tissue pieces can be coated with the coating material according to the present invention.

Herein, the temperature at which a living organism tissue is preserved may preferably be not higher than the temperature which is suitable for the living organism cells. In other words, when homoiothermal animal cells are used, the preservation temperature may usually preferably be not more than the body temperature (in the case of human, about 37°C). In view of the suppression of metabolism rate, the preservation temperature may preferably be not more than room temperature (about 25°C), particularly, not more than 20°C. In addition, when a human tissue is used, the sol-gel transition temperature of a hydrogel-forming polymer may preferably be not more than 37°C (more preferably, not more than 25°C).

(Recovery of preserved living organism tissue)

On the other hand, a method of recovering the living organism tissue (for example, a tissue piece) which has been preserved by using the coating material according to the present invention, from the coating material (in other words, a method of removing the coating material from the preserved living organism tissue) is also very simple and easy. It is possible to use a method wherein the coating material is thawed (converted into a sol state) at a temperature lower than the sol-gel transition temperature of the coating material; or a method wherein the coating material is dissolved by immersing the living organism tissue which has been coated and preserved with the coating material, into a culture liquid or preservative liquid which has been cooled to a temperature lower than the sol-gel transition temperature of the coating material; etc.

(Embedding/supporting)

The schematic perspective views of Fig. 1A, Fig. 1B and Fig. 1C show a method of embedding/supporting a living organism tissue, preserving and culturing the tissue, and recovering the tissue by using the coating material according to the present invention. In an embodiment as shown in these Fig. 1A, Fig. 1B and Fig. 1C, for example, a hydrogel-forming polymer having a sol-gel transition temperature of about 20°C is used, and a living organism tissue is placed in an aqueous solution state thereof at 10°C (Fig. 1A), then the solution is converted into a gel state at 37°C so as to embed the tissue in the gel (Fig. 1B), and as shown in Fig. 1C, the tissue is recovered by again converting the gel into an aqueous solution state at 10°C.

(Preservation/carrying)

The coating material according to the present invention is also suitably usable for the preservation and/or carrying (or transportation) of a living organism tissue. For example, as shown in Examples appearing hereinafter, a living organism tissue is embedded or supported in the gel based on the coating material according to the present invention, and is preserved or carried to a time or place at which the tissue is actually used. In this case, in the prior art, a living organism tissue is preserved or carried while the tissue floats or is suspended in various kinds of "preservative liquid". When such a "preservative liquid" is used, the living organism is damaged in many cases at the time of the preservation/carrying of the tissue, due to the contact of the tissue with walls of a container, or the mutual contact between the living organism tissue pieces. Further, when the living organism tissue to be preserved/carried is a blood component such as red blood cells, white blood corpuscles, and blood platelets, these components are mechanically damaged by the above contact, or converted into an aggregate state by the above contact, in some cases.

On the contrary, when a living organism tissue is embedded or supported in a gel based on the coating material according to the present invention, the mutual contact between the pieces of the living organism tissues and organs, the contact of the tissue or organ with the container, etc., are effectively prevented on the basis of the gel state, and therefore the tissue or organ can be prevented from the mechanical damage thereof. From the same reason, the aggregation of blood components such as red blood cells, white blood corpuscles, and blood platelets can be prevented. In addition, when a living organism tissue is embedded or supported in a gel based on the coating material according to the present invention, even if the container is broken during the preservation/carrying, the living organism tissue or organ can be prevented from the scattering into the surrounding environment. For example, such a prevention of scattering is particularly effective in a case wherein the tissue/organ may produce pollution of surrounding environment (e.g., such as cells made by genetic engineering, and bacillus and virus having a strong infectivity).

When the coating material according to the present invention is applied to immunity-related cells, for example, T cells which have been taken out from an immunity-depressed subject are reactivated by using revitalization substance such as interleukins, and the resultant T cells are returned to the subject so as to enhance the immunity of the subject. In such a case, the sampling of T cells, revitalization, and returning thereof are conducted at respectively different places in many cases, the coating material according to the present invention is particularly suitably usable for the preservation/carrying of these cells. When the coating material according to the present invention is applied to ES cells (so-called universal cells), the mutual contact between the cells, and/or the contact thereof with a container wall can effectively be prevented, and therefore it is easy to maintain the activity of such cells.

## Examples

Hereinbelow, the present invention will be described in more detail with reference to Examples. However, it should be noted that the present invention is defined by the Claims and is not limited by the following Examples.

## Production Example 1

10 g of a polypropylene oxide-polyethylene oxide copolymer (average polymerization degree of propylene oxide/ethylene oxide = about 60/180, Pluronic F-127, mfd. by Asahi Denka K.K.) was dissolved in 30 ml of dry chloroform, and in the co-presence of phosphorus pentaoxide, 0.13g of hexamethylene diisocyanate was added thereto, and the resultant mixture was subjected to reaction under refluxing at the boiling point for six hours. The solvent was distilled off under reduced pressure, the resultant residue was dissolved in distilled water, and subjected to ultrafiltration by using an ultrafiltration membrane having a molecular cutoff of $3 \times 10^4$ (Amicon PM-30) so as to fractionate the product into a low-molecular weight polymer fraction and a high-molecular weight polymer fraction. The resultant aqueous solutions were frozen, to thereby obtain a high-polymerization degree product of F-127 and a low-polymerization degree product of F-127.

The above high-polymerization degree product of F-127 (TGP-1) was dissolved in distilled water under ice-cooling in an amount of 8 mass %. When the resultant aqueous solution was gradually warmed, it was found that the viscosity was gradually increased from 21°C, and was solidified at about 27°C so as to be converted into a hydrogel state. When the resultant hydrogel was cooled, it was returned to an aqueous solution at 21°C. Such a conversion was reversibly and repetitively observed. On the other hand, a solution which had been obtained by dissolving the above low-polymerization degree product of F-127 in distilled water under ice-cooling in an amount of 8 mass %, was not converted into a gel state at all even when it was heated to 60°C or higher.

## Production Example 2

160 mol of ethylene oxide was subjected to an addition reaction with 1 mol of trimethylol propane by cationic polymerization, to thereby obtain polyethylene oxide triol having an average molecular weight of about 7000.

100 g of the thus obtained polyethyleneoxide triol was dissolved in 1000 ml of distilled water, and then 12 g of potassium permanganate was slowly added thereto at room temperature, and the resultant mixture was subjected to an oxidization reaction at this temperature for about one hour. The resultant solid content was removed by filtration, and the product was subjected to extraction with chloroform, and the solvent (chloroform) was distilled off, to thereby obtain 90 g of a polyethylene oxide tricarboxyl derivative.

10 g of the thus obtained polyethylene oxide tricarboxyl derivative, and 10 g of polypropylene oxide diamino derivative (average propylene oxide polymerization degree: about 65, trade name: Jeffamine D-4000, mfd. by Jefferson Chemical Co., U.S.A., cloud point: about 9°C) were dissolved in 1000 ml of carbon tetrachloride, and then 1.2 g of dicyclohexyl carbodiimide was added thereto, and the resultant mixture was allowed to react for 6 hours under refluxing at boiling point. The resultant reaction mixture was cooled and the solid content was removed by filtration, and thereafter the solvent (carbon tetrachloride) therein was distilled off under reduced pressure. Then, the resultant residue was dried under vacuum, to thereby obtain a polymer for coating (TGP-2) comprising plural polypropylene oxide blocks, and polyethylene oxide block combined therewith. This polymer was dissolved in distilled water under cooling with ice so as to provide a concentration of 5 mass %. When the sol-gel transition temperature of the resultant aqueous solution was measured, it was found that the sol-gel transition temperature was about 16°C.

Production Example 3

96 g of N-isopropyl acrylamide (mfd. by Eastman Kodak Co.), 17 g of N-aclyloxy succinimide (mfd. by Kokusan Kagaku K.K.), and 7 g of n-butyl methacrylate (mfd. by Kanto Kagaku K.K.) were dissolved in 4000 ml of chloroform. After the purging with nitrogen gas, 1.5 g of N,N'-azobisisobutyronitrile was added thereto, and the resultant mixture was subjected to polymerization at 60°C for 6 hours. The reaction mixture was concentrated, and then was reprecipitated in diethyl ether. The resultant solid content was recovered by filtration, and then was dried under vacuum, to thereby obtain 78 g of poly (N-isopropyl acrylamide-co-N-aclyloxy succinimide-co-n-butyl methacrylate).
Then, an excess of isopropylamine was added to the thus obtained poly(N-isopropyl acrylamide-co-N-aclyloxy succinimide-co-n-butyl methacrylate) to thereby obtain poly(N-isopropyl acrylamide-co-n-butyl methacrylate). The thus obtained poly(N-isopropyl acrylamide-co-n-butyl methacrylate) had a cloud point of about 19°C in its aqueous solution.
Then, 10 g of the thus obtained poly(N-isopropyl acrylamide-co-N-aclyloxy succinimide-co-n-butyl methacrylate) and 5 g of both terminal-aminated polyethylene oxide (molecular weight = 6000, mfd. by Kawaken Fine Chemical K.K.) were dissolved in 1000 ml of chloroform, and the resultant mixture was allowed to react at 50°C for 3 hours. The reaction mixture was cooled to room temperature, and thereafter 1 g of isopropylamine was added thereto, and was left standing for 1 hour. The reaction mixture was concentrated, and then was precipitated in diethyl ether. The solid content was recovered by filtration, and thereafter was dried under vacuum, to thereby obtain a polymer for coating (TGP-3) comprising plural poly(N-isopropyl acrylamide-co-n-butyl methacrylate) blocks and polyethylene oxide block combined therewith.
This polymer was dissolved in distilled water under cooling with ice so as to provide a concentration of 5 mass %. When the sol-gel transition temperature of the resultant aqueous solution was measured, it was found that the sol-gel transition temperature was about 21°C.

Production Example 4

(Sterilization method)

2.0g of the above-mentioned polymer (TGP-1) was placed in an EOG (ethylene oxide gas) sterilizing bag (trade name: Hybrid Sterilization bag, mfd. by Hogi Medical Co.), and was filled up with EOG by use of an EOG sterilizing device (trade name: Easy Pack, mfd. Inouchi Seieido (AS ONE) Co.) and then the bag was left standing at room temperature for twenty-four hours. Further, the bag was left standing at 40°C for half a day, EOG was removed from the bag and the bag was subjected to aeration. The bag was placed in a vacuum drying chamber (40°C) and was left standing for half a day, and was sterilized while the bag was sometimes subjected to aeration.
Separately, it was confirmed that the sol-gel transition temperature of the polymer solution was not changed even after this sterilization operation.

Production Example 5

Hydrogel-forming polymers respectively providing a hydrogel with a sol-gel transition temperature of 10°C, 20°C and 35°C were obtained in the same manner as in Example 3 except that the quantity of the butyl methacrylate to be used was changed in the following manner.

<Sol-gel transition temperature> <Quantity of butyl methacrylate used>

| 10°C | 14 g |
| 20°C | 8 g |
| 35°C | 0 g |

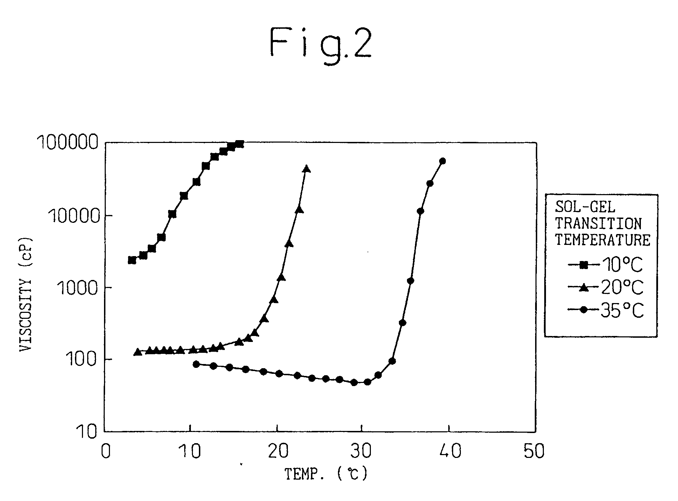

When the change in the viscosity of aqueous solutions of these hydrogel-forming polymer due to a temperature change was measured, the results as shown in the graph of Fig. 2 were obtained.

Production Example 6

When the polymer for coating obtained in Production Example 3 (TGP-3) was dissolved in distilled water so as to provide a concentration of 10 mass %, and η thereof at 37°C was measured, and it was found to be $5.8 \times 10^5$ Pa·sec. On the other hand, agar was dissolved in distilled water at 90°C so as to provide a concentration of 2 mass %, and was converted into a gel state at 10°C for one hour, and thereafter η thereof at 37°C was measured. It was found that the η exceeded the measurement limit ($1 \times 10^7$ pa·sec) of the apparatus.

Example 1

The polymer (TGP-1) obtained in Production Example 1 was sterilized by using the method as described in production Example 4, and the polymer was dissolved at 4°C for 24 hours under stirring in RPMI-1640 (mfd. by Life Technologies Co.) containing 20% of fetal calf serum (FCS, mfd. by Dainippon Pharmaceutical Co., trade name: Fetal Calf Serum), and an antibiotic (mfd. by Life Technologies Co., trade name: Penicillin; final concentration 10,000 U/ ml) so as to provide a final concentration of the polymer of about 8 %. This operation was conducted aseptically.
Pieces of colon cancer tissues and normal colon mucous membrane tissues which had been extracted from three patients by surgical operations were cut into small pieces by using a tissue fine cutting device (mfd. by The Mickle Laboratory Engineering Co. Ltd.) so as to provide a thickness of about 0.5 mm. A culture medium containing 8% of TGP-1 was cooled to 10°C so as to be converted into a sol state, and the above cancer tissue and normal tissue were dispersed into the sol (about 200 µl). The thus obtained tissue dispersion liquid was pipetted into respective wells (size 15×15 mm) of a 24-well plate (mfd. by Becton-Dickinson Co., trade name: Multiwell) so that one or two pieces of the tissue (size of one tissue piece: about 0.5×0.5 mm) were contained in each well so as to provide an amount of tissue dispersion TGP-1 solution of about 600 µl/well.
The 24-well plate was stored at 37°C in an incubator having a $CO_2$ concentration of 5% (mfd. by Dabai-ESPEC Co., trade name: $CO_2$ Incubator), for 1, 2, 4, 7 and 14 days, respectively. After each period of the preservation, the survival cell ratio was measured by the above-mentioned method of measuring the survival cell ratio, and the relative survival cell ratio ($A_T/A_o \times 100\%$) between the survival cell ratio before the preservation ($A_o$) and the survival cell ratio ($A_T$) after each period (T days) of the preservation. The thus obtained results are shown in the following Tables 1 and 2.

Table 1

Relationships between preservation periods and relative survival cell ratios ($A_T/A_o \times 100\%$) in tissue when colon cancer tissues were preserved while being embedded in TGP-1 gel.

[table 1]

| case/preservation days | 0 | 1 | 2 | 4 | 7 | 14 |
|---|---|---|---|---|---|---|
| 1 | 100 | 106 | 109 | 114 | 100 | 72 |
| 2 | 100 | 111 | 117 | 119 | 115 | 78 |
| 3 | 100 | 98 | 110 | 121 | 106 | 64 |

Table 2

Relationships between preservation periods and relative survival cell ratios ($A_T/A_o \times 100\%$) in tissue when colon normal tissues were preserved while being embedded in TGP-1 gel.

[table 2]

| case/preservation days | 0 | 1 | 2 | 4 | 7 | 14 |
|---|---|---|---|---|---|---|
| 1 | 100 | 113 | 110 | 82 | 52 | 44 |
| 2 | 100 | 103 | 96 | 66 | 39 | 42 |
| 3 | 100 | 116 | 119 | 87 | 52 | 51 |

Comparative Example 1

Pieces of colon cancer tissues and normal colon mucous membrane tissues used in Example 1 were dispersed in RPMI-1640 (mfd. by Life Technologies Co.) containing 20% of fetal calf serum (FCS, mfd. by Dainippon Pharmaceutical Co., trade name: Fetal Calf Serum), and an antibiotic (mfd. by Life Technologies Co., trade name: Penicillin). The thus obtained tissue dispersion liquid was pipetted into respective wells of a 24-well plate so that one or two pieces of the tissue were contained in each well so as to provide an amount of tissue dispersion of about 600 μl/well. The 24-well plate was stored at 37°C in an incubator having a $CO_2$ concentration of 5% for 1, 2, 4, 7 and 14 days, respectively. After each period of the preservation, the survival cell ratio ($A_T/A_o \times 100\%$) was determined in the same manner as in Example 1. The thus obtained results are shown in the following Tables 3 and 4.

Table 3

Relationships between preservation periods and relative survival cell ratio ($A_T/A_o \times 100\%$) when colon cancer tissues were preserved in culture medium.

[table 3]

| case/preservation days | 0 | 1 | 2 | 4 | 7 | 14 |
|---|---|---|---|---|---|---|
| 1 | 100 | 49 | 47 | - | - | - |
| 2 | 100 | 54 | - | - | - | - |
| 3 | 100 | 55 | - | - | - | - |
| -: The measurement was impossible since the survival cell ratio was too low. | | | | | | |

Table 4

Relationships between preservation periods and relative survival cell ratio ($A_T/A_o \times 100\%$) when colon normal tissues were preserved in culture medium.

[table 4]

| case/preservation days | 0 | 1 | 2 | 4 | 7 | 14 |
|---|---|---|---|---|---|---|
| 1 | 100 | 30 | - | - | - | - |
| 2 | 100 | - | - | - | - | - |
| 3 | 100 | - | - | - | - | - |
| -: The measurement was impossible since the survival cell ratio was too low. | | | | | | |

As shown in the above Example 1, the relative survival cell ratios in the cancer tissues and normal tissues (after the preservation thereof for two days) which had been coated with the coating material (TGP) according to the present invention are both 100% or more. On the contrary, as shown in the above Comparative Example 1, the relative survival cell ratio (after the preservation for two days) was substantially zero, when these tissues were immersed in the preservative liquid according to the conventional coating method.

It may be presumed that, according to the present inventors' investigations, the reason for the increase in the survival cell ratio in the tissue which has been preserved in the TGP for two days, as compared with that in the initial stage of the tissue, is that the operations of taking out the tissue from a living organism, and cutting it into small pieces can impart some damage to the cells constituting the tissue, but when the tissue is preserved in the TGP, the tissue recovers from the damage so as to improve the survival cell ratio therein. In addition, in the samples which had been preserved for seven days, when the tissues had been coated with the TGP and preserved in the TGP, the resultant relative survival cell ratio was about 100% in the case of the cancer tissue, and was 40-50% in the case of the normal tissue. On the contrary, when the tissues had been coated in the conventional manner, surviving cells were not found. Further, the above-mentioned experimental data show that the cancer tissue exhibits a better storage stability than that of the normal tissue.

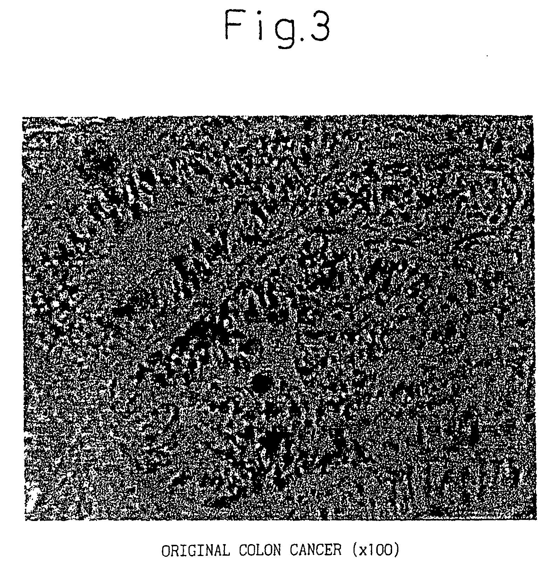

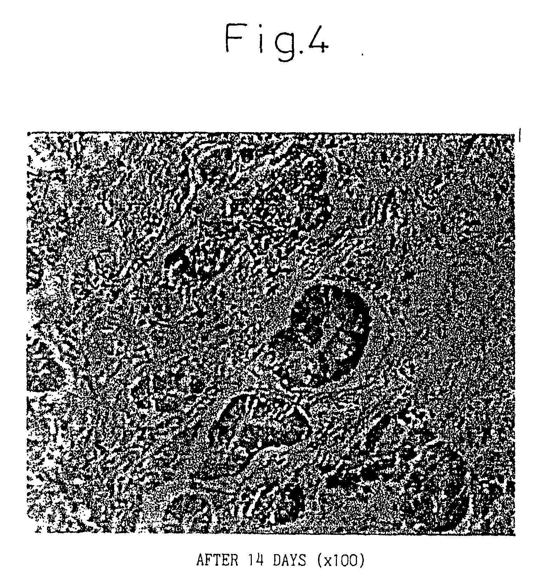

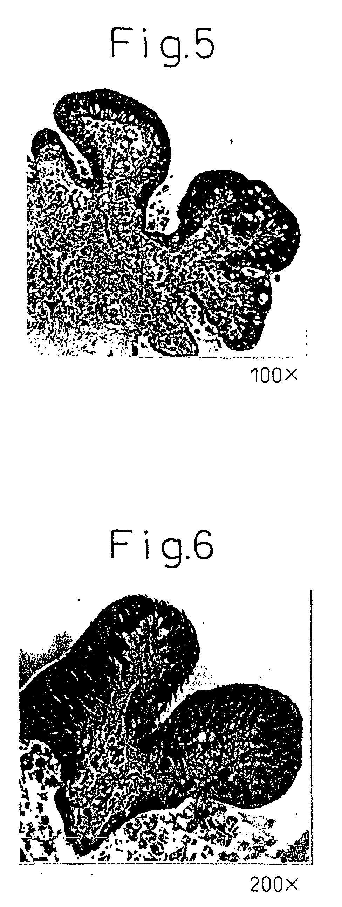

The result obtained in the above-mentioned experiments are shown in the optical microscope photographs including : Fig. 3 (image of primary focus of colon cancer having a magnification of 100 times), Fig. 4 (image of colon cancer after the culturing thereof for 14 days having a magnification of 100 times), Figs. 5 and 6 (images of colon cancer after the culturing thereof for 7 days having magnifications of 100 times and 200 times, respectively), and Figs. 5 and 6 (images of colon normal tissue after the culturing thereof for 7 days having magnifications of 100 times and 200 times, respectively). When these photographs are observed, it can be seen that the tissue before the culturing is well maintained even after the culturing, when the coating material according to the present invention is used.

Industrial Applicability

As described hereinabove, the present invention provides a coating material for a living organism tissue which is capable of preserving a living organism tissue for a long time and/or of carrying the living organism tissue, while maintaining the cell activity; and a coated product of a living organism tissue and a method of coating a living organism tissue by using such a coating material.

**Claims**

1. A coating material for a living organism tissue, comprising at least a hydrogel-forming polymer; the coating material showing a thermo-reversible sol-gel transition such that it assumes a sol state at a lower temperature and assumes a gel state at a higher temperature; the coating material being capable of providing a ratio ($A_2/A_0$) of 20 % or more between the survival cell ratio ($A_0$) in a living organism tissue just before the coating with the coating material, and the survival cell ratio ($A_2$) in the living organism tissue two days after the coating.

2. A coating material for a living organism tissue, comprising at least a hydrogel-forming polymer; the coating material showing a thermo-reversible sol-gel transition such that it assumes a sol state at a lower temperature and assumes a gel state at a higher temperature; the coating material being capable of providing a ratio ($A_7/A_0$) of 5 % or more between the survival cell ratio ($A_0$) in a living organism tissue just before the coating with the coating material, and the survival cell ratio ($A_7$) in the living organism tissue seven days after the coating.

3. A coating material for a living organism tissue according to claim 1 or 2, wherein the hydrogel based on the polymer has a three-dimensional network structure which can suppress the elution of a substance contained in the living organism tissue toward the outside of the tissue.

4. A coating material for a living organism tissue according to any of claims 1 - 3, wherein the hydrogel based on the polymer comprises, at least a portion thereof, a hydrophobic region which can suppress the elution of a fat-soluble substance contained in the living organism tissue toward the outside of the tissue.

5. A coating material for a living organism tissue according to any of claims 1 - 4, wherein the hydrogel based on the polymer comprises, at at least a portion thereof, a region which can follow the morphological change in the living organism tissue as an object to be coated, so as to maintain the adhesion between the tissue and the coating material.

6. A coating material for a living organism tissue according to any of claims 1 - 5, wherein the hydrogel based on the polymer comprises, at at least a portion thereof, a region which comprises a combination of a plurality of blocks having a cloud point, and hydrophilic blocks.

7. A coating material for a living organism tissue according to any of claims 1 - 6, wherein the solution of the coating material reversibly assumes a liquid state (sol state) at a temperature lower than the sol-gel transition temperature, and assumes a gel state which is substantially water-insoluble at a temperature higher than the sol-gel transition temperature, even when additional water is added to the gel at the temperature higher than the sol-gel transition temperature.

8. A coating material for a living organism tissue according to any of claims 1 - 7, wherein the sol-gel transition temperature is higher than 0°C and not higher than 42°C.

9. A method of coating a living organism tissue, comprising:

   providing a solution of a coating material in a sol state at a temperature lower than the sol-gel transition temperature of the coating material; the coating material comprising a hydrogel-forming polymer; the coating material showing a thermo-reversible sol-gel transition such that it assumes a sol state at a lower temperature and assumes a gel state at a higher temperature;

applying the coating material in the sol state to a living organism tissue; and

converting the coating material into a gel state at a temperature higher than the sol-gel transition temperature, so as to coat the living organism tissue with the coating material.

10. A method of coating a living organism tissue according to claim 9, wherein the coating material covering the living organism tissue is again converted into a sol state at a temperature lower than the sol-gel transition temperature, so as to remove the coating material from the living organism tissue.

11. A coated product comprising at least a living organism tissue, and a coating material disposed on the surrounding of the living organism tissue;

wherein the coating material is capable of providing a ratio ($A_2/A_0$) of 20 % or more between the survival cell ratio ($A_0$) in a living organism tissue just before the coating with the coating material, and the survival cell ratio ($A_2$) in the living organism tissue after two days counted from the coating.

12. A coated product comprising at least a living organism tissue, and a coating material disposed on the surrounding of the living organism tissue;

wherein the coating material is capable of providing a ratio ($A_7/A_0$) of 5 % or more between the survival cell ratio ($A_0$) in a living organism tissue just before the coating with the coating material, and the survival cell ratio ($A_7$) in the living organism tissue after seven days counted from the coating.

13. A coated product of a living organism tissue according to claim 11 or 12, wherein the living organism tissue originates from an animal.

14. A coated product of a living organism tissue according to claim 13, wherein the living organism tissue originates from a mammal.

15. A coated product of a living organism tissue according to claim 14, wherein the living organism tissue originates from a human.

16. A coated product of a living organism tissue according to claim 15, wherein the living organism tissue originates from at least one tissue selected from: gullet, stomach, small intestine, colon, pancreas, liver, skin, blood vessel, bone, and blood component.

17. A coating material for a living organism tissue, comprising at least a hydrogel-forming polymer;

the coating material showing a thermo-reversible sol-gel transition such that it assumes a sol state at a lower temperature and assumes a gel state at a higher temperature;

the coating material being capable of behaving as a solid toward a strain having a frequency of $\omega/2\pi = 1$ Hz, and behaving as a liquid toward a strain having a frequency of $\omega/2\pi = 10^{-4}$ Hz, at a temperature about 10°C higher than the sol-gel transition temperature the coating material.

18. A coating material for a living organism tissue, comprising at least a hydrogel-forming polymer;

the coating material showing a thermo-reversible sol-gel transition such that it assumes a sol state at a lower temperature and assumes a gel state at a higher temperature;

the coating material being capable of providing a ratio $\{(\tan \delta)_s/ (\tan \delta)_L\}$ of less than 1 between the ratio of dynamic elasticity modulus/loss elasticity modulus of $(G''/G')_s =(\tan \delta)_s$ toward a strain having a frequency of $\omega/2\pi = 1$ Hz, and the ratio of $(G''/G')_L =(\tan\delta)_L$ toward a strain having a frequency of $\omega/2\pi = 10^{-4}$ Hz, at a temperature about 10°C higher than the sol-gel transition temperature of the coating material.

19. A coating material for a living organism tissue, comprising at least a hydrogel-forming polymer;

the coating material showing a thermo-reversible sol-gel transition such that it assumes a sol state at a lower temperature and assumes a gel state at a higher temperature;

the coating material being capable of providing a steady-state flow kinematic viscosity $\eta$ of $5\times10^3$-$5\times10^6$Pa·sec, at a temperature about 10°C higher than the sol-gel transition temperature of the coating material.

Fig.1(a)

EMBEDDING

10℃ AQUEOUS
SOLUTION

Fig.1(b)

PRESERVATION,
CARRYING, CULTURING

37℃ GEL

Fig.1(c)

RECOVERY

10℃ AQUEOUS
SOLUTION

# Fig.2

# Fig.3

ORIGINAL COLON CANCER (x100)

# Fig.4

AFTER 14 DAYS (x100)

# Fig.5

100×

# Fig.6

200×

# Fig.7

100×

# Fig.8

200×

EP 1 266 570 A1

## INTERNATIONAL SEARCH REPORT

| | International application No. |
|---|---|
| | PCT/JP01/02241 |

**A. CLASSIFICATION OF SUBJECT MATTER**
Int.Cl$^7$ A01N1/02, C12N5/00, G01N33/48, G01N1/28

According to International Patent Classification (IPC) or to both national classification and IPC

**B. FIELDS SEARCHED**

Minimum documentation searched (classification system followed by classification symbols)
Int.Cl$^7$ A01N1/02, C12N5/00, G01N33/48, G01N1/28

Documentation searched other than minimum documentation to the extent that such documents are included in the fields searched

Electronic data base consulted during the international search (name of data base and, where practicable, search terms used)
CAPLUS(STN)
REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | JP, 9-227329, A (M & M Kenkyusho K.K.), 02 September, 1997 (02.09.97), page 8, Column 14, line 19 to page 10, Column 18, line 26 (Family: none) | 1-19 |
| X | JP, 6-343451, A (Yamato KUBOTA), 20 December, 1994 (20.12.94), page 8, Column 14, line 41 to page 11, Column 20, line 12 (Family: none) | 1-19 |
| X | JP, 6-245988, A (Yamato KUBOTA), 06 September, 1994 (06.09.94), page 7, Column 11, line 33 to page 9, Column 16, line 7 (Family: none) | 1-19 |
| X | JP, 6-153928, A (Yamato KUBOTA), 03 June, 1994 (03.06.94), page 5, Column 8, line 40 to page 8, Column 13, line 8 (Family: none) | 1-19 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 June, 2001 (04.06.01) | 19 June, 2001 (19.06.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

30

**INTERNATIONAL SEARCH REPORT**

International application No.

PCT/JP01/02241

C (Continuation). DOCUMENTS CONSIDERED TO BE RELEVANT

| Category* | Citation of document, with indication, where appropriate, of the relevant passages | Relevant to claim No. |
|---|---|---|
| X | JP, 6-141851, A (Yamato KUBOTA),<br>24 May, 1994 (24.05.94),<br>page 5, Column 8, line 50 to page 7, Column 11, line 33<br>(Family: none) | 1-19 |
| Y | JP, 11-169703, A (M & M Kenkyusho K.K.),<br>29 June, 1999 (29.06.99),<br>page 2, Column 1, line 1 to Column 2, line 11 (Family:<br>none) | 1-19 |
| Y | JP, 5-84290, A (Terumo Corporation),<br>06 April, 1993 (06.04.93),<br>page 2, Column 2, line 42 to page 4, Column 6, line 7<br>(Family: none) | 1-19 |
| Y | EP, 386960, A2 (American Cyanamid Company),<br>12 September, 1990 (12.09.90),<br>page 10, line 41 to page 25, line 23<br>& FI, 901102, A     & JP, 2-300114, A<br>& CA, 2011423, A     & AU, 632539, B<br>& GB, 2229443, A | 1-19 |
| Y | JP, 6-116169, A (Res. Dev Corp. of Japan.),<br>26 April, 1994 (26.04.94),<br>page 2, Column 2, line 44 to page 3, Column 3, line 26;<br>page 6, Column 9, line 46 to page 7, Column 12, line 42<br>(Family: none) | 1-19 |
| Y | JP, 5-262882, A (W R Grace & Co-Conn),<br>12 October, 1993 (12.10.93),<br>page 2, Column 2, line 1 to page 4, Column 6, line 1<br>(Family: none) | 1-19 |

Form PCT/ISA/210 (continuation of second sheet) (July 1⸀